# EUROPÄISCHE PATENTSCHRIFT

(11) **EP 1 208 955 B1**
(45) Veröffentlichungstag und Bekanntmachung des Hinweises auf die Patenterteilung: **12.07.2006**
(21) Anmeldenummer: 01127799.3
(22) Anmeldetag: 22.11.2001
(51) Int. Cl.: B29C 45/56, B29C 45/16

(54) **Spritzgussverfahren mit variablem Formhohlraum zur Herstellung von Korken**
Injection moulding with variable cavity for making corks
Méthode de moulage par injection acec une cavité variable pour la fabrication de bouchons

(30) Priorität: 28.11.2000 IT BZ000051
(43) Veröffentlichungstag der Anmeldung: 29.05.2002
(73) Patentinhaber: INTERCABLE SRL, I-39031 Brunico (Bolzano) (IT)
(72) Erfinder: Mutschlechner, Klaus, 39031 Brunico (Bolzano) (IT)
(74) Vertreter: Oberosler, Ludwig

(56) Entgegenhaltungen:
- EP-A- 0 755 763
- GB-A- 1 339 445
- US-A- 4 489 033
- US-A- 4 803 031
- PATENT ABSTRACTS OF JAPAN vol. 005, no. 010 (M-051), 22. Januar 1981 (1981-01-22) & JP 55 140539 A (TOPPAN PRINTING CO LTD), 4. November 1980 (1980-11-04)
- PATENT ABSTRACTS OF JAPAN vol. 1999, no. 13, 30. November 1999 (1999-11-30) & JP 11 207782 A (TOYOTA AUTO BODY CO LTD), 3. August 1999 (1999-08-03)

## Beschreibung

Die Erfindung bezieht sich auf ein Spritzgussverfahren für die Herstellung von dickwandigen Formteilen ohne Hohlräume oder Querschnittvezweigungen wie z.B. Korken oder dergleichen aus thermoplastischem Kunststoff welche im Ein- oder Mehrkomponentenverfahren herstellbar sind, wobei im letzteren Fall eventuell die "Sandwichtechnik" oder die "Overmoldingtechnik" genutzt wird und zwar mit oder ohne Einsatz von Treibmitteln.
Es sind, z.B. für die Herstellung von Flaschenkorken aus Kunststoff, folgende Verfahren bekannt:
- das Einkomponentenverfahren unter Einsatz von Treibmitteln welches das Standardspritzgussverfahren nutzt bei welchem die Schmelze in einen, der Endform entsprechendem, Hohlraum eingespritzt wird. Die Anspritzung erfolgt in der Regel mittig an einer der beiden Stirnflächen; dies bewirkt eine Freistrahleinspritzung welche an der Oberfläche des Formteiles die Ausbildung von sichtbaren Fließmarkierungen zur Folge hat. Weiters wird durch den Einsatz des Treibmittels die Oberfläche porös und nicht so glatt wie man es von anderen Kunststoffteilen gewöhnt ist, wenn auch diese Porosität durch die Temperatur der Form, durch die Temperatur der Schmelze, durch dem Anteil an Treibmittel und durch die Einspritzgeschwindigkeit beeinflussbar ist, ist es nicht möglich eine glatte Außenfläche zu erreichen (Orangenhaut).
- das Zweikomponentenverfahren ("sandwich") besteht im Einspritzen einer ersten Komponente welche geeignete Eigenschaften aufweist um glatte, nicht poröse Außenflächen und kompakte Außenwände zu erhalten, gefolgt vom Einspritzen eines Werkstoffes mit oder ohne Treibmittel welcher innerhalb des ersten Werkstoffes, in einem ersten Moment eine Tropfen- oder Lanzenform einnimmt und anschließend den umhüllenden Werkstoff so verformt, dass dieser sich an alle innere Flächen des Formhohlraumes anlegt um am Ende des Formzyklus eine äußere aus dem ersten Werkstoff bestehende Schale zu erhalten welche vollständig einen inneren Kern umhüllt welcher aus unterschiedlichem, eventuell porösem, Werkstoff besteht.
- das Zweikomponentenverfahren "overmolding" besteht in der Verwendung einer Form in deren Formhohlraum eine bewegliche Hülse vorgesehen ist; während des Einspritzens einer ersten Komponente, welche den Kern bildet, nimmt die Hülse den Mantelbereich des herzustellenden (zylindrischen) Formteiles ein, während für die Formung der Außenhülle die Hülse aus dem Formhohlraum gezogen wird so dass die zweite Komponente den so entstandenen Hohlraum zwischen Kern und Außenfläche des Formhohlraumes einnimmt.
Jedes der angeführten Verfahren, insbesondere in Anwendung für die Herstellung von Flaschenkorken, weist verschiedene Nachteile auf:
- das Einkomponentenverfahren unter Einsatz von Treibmitteln ermöglicht nicht die Erreichung einer glatten Außenfläche mit geschlossenen Poren und frei von Fließmarkierungen, weiters weisen weder der Kern noch die frontalen Wände, welche meist kompaktere Struktur aufweisen sollen, die nötige Dichte auf um das problemlose Ausziehen mittels Korkenzieher zu gewähren;
- das Zweikomponentenverfahren "sandwich" ermöglicht es porenlose aber nicht fließmarkierungslose Oberflächen zu erhalten, der Kern und die frontalen Flächen weisen nicht immer die nötige Dichte für das Ausziehen mittels Korkenzieher auf, weiters kann die Wandstärke der Außenhülle sehr unterschiedliche Stärke in den einzelnen Bereichen aufweisen,
- das Zweikomponentenverfahren "overmolding" weist den Nachteil auf, dass der Kern, nachdem die Hülse zurückgezogen wurde und während dem Einspritzen des Werkstoffes welcher die, den Kern umhüllenden, Außenwände bildet, sich oft außer der Mittelachse verschiebt wodurch, sei es an den frontalen Wänden als auch an der Mantelwand unterschiedliche Wandstärken entstehen, dieses Verfahren erfordert überdies lange Kühlzeiten für den Kernteil bis mit dem Einspritzen des Werkstoffes für die Ummantelung begonnen werden kann.

Es ist bekannt die Auswirkungen des Freistrahles dadurch zu beseitigen oder zu vermindern, indem der Einspritzkanal so positionier wird dass die Schmelze auf eine nahe liegende Fläche oder Kante des Formhohlraumes trifft; dadurch wird der Strahl der eingespritzten Schmelze einem Stau des eingespritzten Materials ausgesetzt, der Strahl kann nicht frei in den Hohlraum entweichen sondern vermischt sich dauernd mit den vorher eingespritzten Materialanteilen und reißt diese mit, wodurch auch eine Durchmischung der Materialanteile und somit ein Temperaturausgleich erfolgt.

Aus der JP-A-55 140 539 ist eine Spritzgussform bekannt bei welcher der Formhohlraum während oder/und gleich nach der Einspritzphase verkleinert wird. Durch dieses Verfahren das einem Pressgussverfahren ähnlich ist, kann zwar eine vollständige Füllung von dünnwandigen Bereichen oder Verzweigungen des Formhohlraumes erreicht werden und es können hochverdichtete Kunststoffteile hergestellt werden. Die Auswirkungen des Freistrahles im Falle der Herstellung dickwandiger Formteile können jedoch durch eine derartige Spritzgussform nicht verhindert werden weil das Volumen des Formhohlraumes am Beginn der Einspritzphase sogar größer als jenes des Formteiles ist und auch der Abstand von der Austrittöffnung der Einspritzdüse zur gegenüberliegenden Innenfläche des Formhohlraumes, insbesondere während der ersten kritischen Phase der Einspritzung, vergrößert ist.

Aus der US-A-4 803 031 ist ein Zweikomponentenverfahren bekannt womit in einer ersten Phase, mittels ausfahrbarem Kolben welcher an seiner Stirnfläche den Formhohlraum für ein Dichtelement trägt, das Dichtelement für einen Schraubverschluss mittels eigenem Einspritzkanal gespritzt wird. In einer zweiten Phase wird anschließend, infolge Zurückfahren des Kolbens zusammen mit dem gespritzten Dichtelement um die Wandstärke der Stirnwand der Schraubkapsel, diese Schraubkapsel mittels eigenem Einspritzkanal gespritzt. Die dünnwandigen Formteile (Dichtelement und Schraubkapsel) sowie die Anordnung der Einspritzdüsen schließen einen Freistrahleffekt aus. Die Bewegungen des Kolbens dienen ausschließlich zur Definition eines ersten Formhohlraumes für das Dichtelement und anschließend eines zweiten Formhohlraumes für die Schraubkapsel. Es ist während der beiden Einspritzphasen keine progressive Veränderung der Formholräume vorgesehen und es wird dem Einspritzdruck in keiner Weise entgegengewirkt.

Aus der EP-A-0 755 763 ist ein Spritzgussverfahren zur Herstellung eher flacher, mehrschichtiger Formteile bekannt bei welchem der Formhohlraum, nach dem Einspritzen der verschiedenen Komponenten, verkleinert wird um den Ausmaßen des fertigen Formteiles zu entsprechen. Insbesondere für das Einspritzen der ersten Komponente in den vergrößerten Formhohlraum wird keinerlei Vorkehrung getroffen um einen Freistrahl zu verhindern, es ist auch nicht vorgesehen während einer Einspritzphase, durch progressives Freigeben des Volumens des Formhohlraumes, dem Einspritzdruck entgegenzuwirken. Die Volumenreduzierung dient um dem Formteil, unter Beibehaltung der erzeugten Materialschichtung, die definitive Form zu verleihen. Der Blähwirkung der Treibmittel welche eventuell der Schmelze zugesetzt sind, wird erst nach Abschluss der letzten Einspritzphase, bzw. gegen Ende der letzten Einspritzphase, entgegengewirkt. In Abhängigkeit der Temperatur der Schmelze, der Einspritzgeschwindigkeit, der Temperatur der Spritzgussform und des Druckes mit welchem die Reduzierung des Volumens des Formhohlraumes erfolgt, kann eine Verdichtung der Formteiloberfläche und eine Oberflächenvergütung erfolgen.
Aus der US-A-4 489 033 ist ein Pressgussverfahren bekannt in welchem keine Veränderung des Formhohlraumes zwecks Freistrahlvermeidung erfolgt. Die Vergrößerung des Formhohlraumes (über das Volumen des Formteiles) erfolgt nicht fortschreitend während des Ablaufes der Einspritzphase und dient dazu anschließend eine Reduzierung des Formhohlraumes zwecks Verdichtung des Formteiles durchzuführen.

Aus der WO-A-0047390 ist ein Spritzgussverfahren zur Herstellung von Flaschenkorken oder ähnlicher dickwandiger Gegenstände ohne Hohlräume oder Querschnittsverzweigungen aus thermoplastischem Kunststoff mit oder ohne Treibmittel bekannt, wobei der Formhohlraum der Spritzgussform während der Einspritzphase der Schmelze geometrisch verändert wird indem der Formhohlraum vor dem Einspritzen der Schmelze durch Vorfahren eines Kolbens auf ein Mindestvolumen am Beginn des Einspritzens reduziert wird und während der Dauer des Einspritzens der Schmelze der Formhohlraum progressiv durch Zurückfahren des Kolbens vergrößert wird. Die Praxis hat gezeigt, dass es bei diesem Verfahren während des Einspritzens, bedingt durch den Ablauf der Einspritzung, zu bemerkenswerten Druckschwankungen im Inneren des Formhohlraumes kommt, was Schwankungen in der Aufschäumung und somit eine unerwünschte ungleichmäßig verteilte Porenstruktur im Inneren des Formteiles und eine heterogene Struktur an den Außenflächen des Formteiles zur Folge hat.

Aus der US-A-4507405 ist ein Verfahren zur Herstellung von Flaschenverschlüssen aus thermoplastischem Kunststoff bekannt deren äußeres Aussehen jenem des natürlichen Korken ähnlich ist. Dem Kunststoff ist ein Treibmittel und ein Farbstoff zugesetzt. Der Ablauf der Einspritzphase, die Temperaturen und der Einspritzdruck sind dermaßen ausgerichtet, dass an der Außenfläche des hergestellten Gegenstandes eine Fließmarkierung entsteht um ein korkartiges Aussehen vorzutäuschen. Die Praxis hat gezeigt, dass Außenflächen mit Fließmarkierungen an Flaschenkorken häufig zu Dichtungsproblemen führen und beim maschinellen Einsetzen, bzw. beim händischen Ausziehen, der Korken die Gleiteigenschaften nachteilig beeinflussen. Das Einspritzen im Freistrahl bringt zudem eine sehr unterschiedliche Aufschäumung des Materials, bedingt durch unterschiedliche Kühlung der eingespritzten Kunststoffmengen und somit eine heterogene Innenstruktur des Formteiles mit sich, was sich ungünstig auf die Elastizität und somit auf die maschinelle Einbringung der Korken in den Flaschenhals auswirkt.

Die Erfindung stellt sich die Aufgabe ein Spritzgußverfahren für die Herstellung dickwandiger Formteile, insbesondere für Flaschenkorken und dergleichen zu schaffen, durch welches, unabhängig von den oben angeführten Spritztechniken und vom eventuellen Einsatz von Treibmitteln, glatte, nicht poröse und fließmarkierungsfreie Außenoberflächen erreicht werden; außerdem sollen die, den Kern umhüllenden Außenwände eine für die spezifische Verwendung des hergestellten Formteiles, z.B. als Flaschenkork, geeignete Dichte und Wandstärke aufweisen und überdies sollen, insbesondere bei Anwendung der Overmoldingtechnik, die Kühlzeiten beachtlich verkürzt werden.

Diese Aufgabe wird durch das Verfahren gemäß anliegendem Anspruch 1 gelöst. Vorteilhafte Weiterbildungen sind in den Unteransprüchen offenbart.

Die Verwendung eines Formhohlraumes mit veränderbarer Geometrie hat zur Folge daß eine Einspritzung im Freistrahl mindestens für den Werkstoff welcher die Umhüllung bildet verhindert werden kann; im Falle der Anwendung des Zweikomponentenverfahrens in Overmoldingtechnik wird eine Zentrierung des Kerns realisiert welche die Verkürzung der Kühlzeiten ermöglicht. Gemäß einer Weiterentwicklung des Erfindungsgedankens ist es möglich, insbesondere bei Anwendung der Overmoldingtechnik, vorgefertigte, z.B. extrudierte Kerne zu verwenden welche in den Formhohlraum eingesetzt werden um so umspritzt zu werden, daß eine Umhüllung mit gleichmäßiger Wandstärke und mit Außenflächen welche ohne Nachbehandlungen die gewünschten Eigenschaften aufweisen, entsteht. Um dies zu erreichen schlägt die Erfindung vor, z.B. im zylindrischen Formhohlraum für die Herstellung von Flaschenkorken, bei Anwendung des Einkomponentenverfahrens, einen koaxialen Kolben vorzusehen welcher, bei Beginn der Einspritzung den gesamten oder fast den gesamten Formhohlraum besetzt und während der Einspritzung progressiv, in Abhängigkeit des Einspritzens der Schmelze zurückgefahren wird um progressiv das Volumen des Formhohlraumes freizugeben wodurch eine Freistrahleinspritzung und somit die Bildung von Fließmarkierungen vermieden werden.

Das selbe Verfahren ist für das Zweikomponentenverfahren in Sandwichtechnik anwendbar. In diesem Fall nimmt der Kolben am Beginn der Einspritzung der ersten Komponente, welche jene sein wird welche die umhüllende Außenschicht des zu produzierenden Gegenstandes bildet, fast das gesamte Volumen des Formhohlraumes ein, um progressiv in Abhängigkeit des Einspritzens der Schmelze zum Abschluß des Einspritzens der ersten Komponente zurückzuweichen. Mit Beginn der Einspritzung der zweiten Komponente nimmt der Kolben die progressive Rückzugbewegung wieder auf bis das gesamte Volumen des Formhohlraumes, welches dem Volumen des hergestellten Gegenstandes entspricht, freigegeben ist. Auf diese Weise wird während des Einspritzens der ersten Komponente ein Freistrahl und somit die Ausbildung von Fließmarkierungen verhindert, wobei während des Einspritzens der zweiten Komponente in einer ersten Phase erreicht wird, daß diese sich innerhalb der ersten Komponente so ausbreitet, daß eine geometrisch zentrierte und regelmäßige Form innerhalb der Umhüllung aus der ersten Komponente eingenommen wird, wobei durch die anschließende Einspritzung ein Strecken der Mantelwände (des Korkens) der Umhüllung erreicht wird was die Bildung von Wänden mit sehr gleichmäßiger und homogener Wandstärke bewirkt.
Weiters ist das selbe Verfahren für die Zweikomponenten-Overmoldingtechnik anwendbar. In diesem Fall besteht der Kolben welcher im Innern des Formhohlraumes wirkt aus zwei konzentrischen Hülsen welche über einen zentralen Bolzen geschoben sind, alle Teile dieses Kolbenorgans sind axial und voneinander unabhängig verschiebbar. Währen der gesamten Dauer des Einspritzens der Komponente welche den Kern des herzustellenden Gegenstandes bildet ist die äußere Hülse so eingeschoben, daß sie die gesamte axiale Längserstreckung des Formhohlraumes einnimmt während die innere Hülse, zusammen mit dem zentralen Bolzen, mit den zueinander ausgerichteten Stirnflächen, eine Position einnehmen welche der gesamten axialen Längserstreckung, minus eine Strecke welche der Summe der zwei frontalen Wandstärken des herzustellenden Gegenstandes entspricht. Anschließend wird die äußere Hülse, zusammen mit der inneren Hülse und dem zentralen Bolzen und auch zusammen mit dem Kern des herzustellenden Gegenstandes welcher innerhalb der äußeren Hülse enthalten ist, axial um eine Strecke zurückgezogen welche der Wandstärke einer Stirnwand des herzustellenden Objektes entspricht. Anschließend an diese Verschiebung erfolgt die Einspritzung der Komponente welche die Außenwände des herzustellenden Gegenstandes bildet und zwar wird das eingespritzte Material den Raum ausfüllen welcher einer der Stirnwände entspricht.
Anschließend erfolgt, in Funktion des Flusses des eingespritzten Materials, das progressive Zurückziehen der äußeren Hülse und der Zwischenhülse in eine Position in welcher beide mit ihrer Stirnfläche die maximale axiale Längserstreckung des zu produzierenden Objektes einnehmen um den gesamten Bereich der Mantelwand und einen Ringbereich der zweiten Stirnwand für die Einspritzung frei zu machen. Der zentrale Bolzen bleibt während dieser Phase in Kontakt mit dem Kern des herzustellenden Gegenstandes um so ein axiales Verschieben des Kerns unter Einfluß des einfließenden Materials zu verhindern. Schließlich wird auch der zentrale Bolzen zurückgezogen bis dieser mit seiner Stirnfläche mit den Stirnflächen der beiden Hülsen ausgerichtet ist und um so durch eine weitere Einspritzung die vollständige Ausbildung der zweiten Stirnwand zu realisieren. Die Hülsen und der zentrale Bolzen werden im Einklang mit den Einspritzphasen der beiden Komponenten welche das Endprodukt bilden bewegt und gesteuert, die Bewegung dieser Teile kann also in Funktion des Materialflusses während der Einspritzung auf kontrollierte Art erfolgen.
Das erfindungsgemäße Verfahren ist, sei es für die Einkomponententechnik als auch für die Zweikomponententechnik, mit oder ohne Treibmittel zum Aufschäumen einer oder beider eingespritzter Komponenten, anwendbar.
Die Bewegung und die Steuerung des Kolbens oder anderer Elemente welche geeignet sind um die Geometrie des Formhohlraumes während der Einspritzung zu verändern, kann durch den Einspritzdruck selbst erfolgen indem z.B. Federn, bzw. Luft oder Gas welche auf den Kolben wirken, komprimiert werden. Diese Elemente können aber auch z.B. pneumatisch, hydraulisch oder mechanisch betätigt werden und ihre Verschiebung kann, in Bezug auf die Einspritzphasen der Schmelze und auf den Auswurf des produzierten Objektes, gesteuert werden. Erfindungsgemäß kann die Gegenwirkung eines Kolbens oder eines anderen mechanischen Mittels welches im Innern des Formhohlraumes verschiebbar ist, auch durch die Wirkung von Gas (z.B. durch Stickstoff) ersetzt werden welches am Beginn des Einspritzens den gesamten abgedichteten Formhohlraum ausfüllt um progressiv während des Einspritzens abzufließen und nach dem Auswurf des geformten Gegenstandes, unmittelbar vor der nächsten Einspritzung, wieder einfließt.
Wenn auch durch diese Technik nicht das Einspritzen mit Freistrahl vermieden wird, so begrenzt sie doch dessen Auswirkungen und ermöglicht es die Aufschäumung im Bereich der Außenflächen des herzustellenden Gegenstandes zu begrenzen oder zu kontrollieren um so glatte und porenfreie Außenflächen zu erhalten.
Insbesondere für die Herstellung von Flaschenkorken ist ein Mehrkomponentenverfahren bekannt welches es ermöglicht eine Außenfläche zu schaffen welche für das Einsetzen und Ausziehen des Korkens gute Gleiteigenschaften zusammen mit einer guten Abdichtung und Anschmiegung bietet, dabei werden dem Kern die mechanischen Eigenschaften zugeteilt welche den erforderlichen Druck beim Einsetzen des Korkens in die Flasche, bzw. beim Ausziehen aus der Flasche, sichern. Insbesondere um die Gleiteigenschaften, die Anschmiegung und Abdichtung zu sichern, müssen die bekannten Herstellungsverfahren für Korken eine Nachbehandlung und Nachbearbeitungen der Außenoberflächen vorsehen. Das erfindungsgemäße Verfahren ermöglicht hingegen wie oben beschrieben auch bei Anwendung der Zwei- oder Mehrkomponententechnik nach dem Sandwich- oder dem Overmoldingverfahren, Außenoberflächen zu erhalten welche den gewünschten Anforderungen entsprechen und Wände erzeugen welche die gewünschte Wandstärke und Dichte aufweisen ohne von Nachbehandlungen und/oder Nachbearbeitungen Gebrauch machen zu müssen.

Die Erfindung wird anschließend anhand einiger Anwendungsbeispiele gemäß dem erfindungsgemäßen Herstellungsverfahren, unter Berücksichtigung unterschiedlicher Einspritztechniken, für die Herstellung von Flaschenkorken oder ähnlicher Gegenstände welche in den beigelegten Zeichnungen schematisch dargestellt sind, näher erklärt; dabei erfüllen die Zeichnungen rein erklärenden, nicht begrenzenden Zweck.

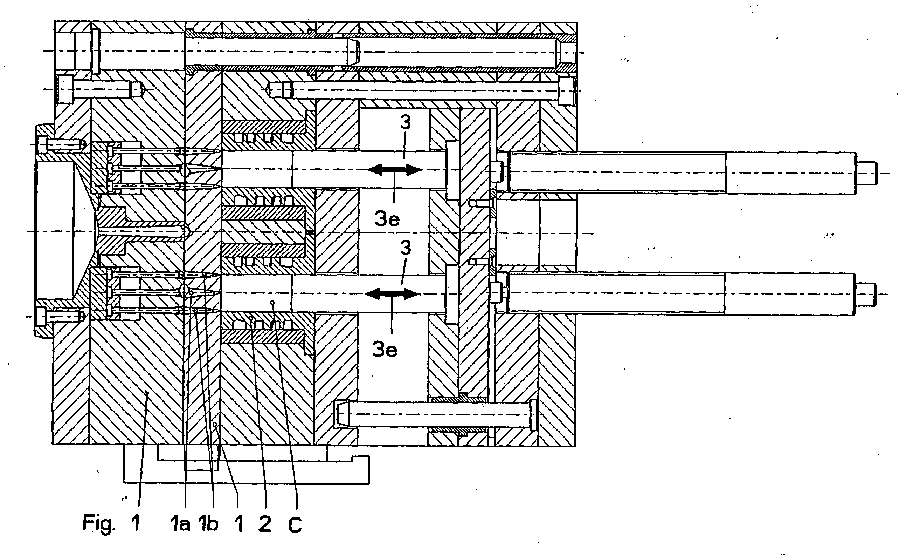

Die Fig. 1 zeigt einen Längsschnitt durch eine Spritzgußform für die Herstellung von Flaschenkorken im Ein- oder Zweikomponentenverfahren in Sandwichtechnik unter Nutzung des erfindungsgemäßen Verfahrens zur Vermeidung des Freistrahls.
Die Figuren von 2 bis 5 zeigen schematisch vier Arbeitsphasen der in Fig. 1 gezeigten Spritzgußform bei Anwendung des Zweikomponentenverfahrens in Sandwichtechnik unter Vermeidung des Freistrahls:
- in Fig. 2 ist die Phase zu Beginn der Einspritzung des Materials gezeigt welches die Umhüllung bildet, der verschiebbare Kolben nimmt fast den gesamten Formhohlraum ein um so ein Einspritzen mit Freistrahl zu verhindern;
- in Fig. 3 ist das Ende des Einspritzens des Materials für die Umhüllung gezeigt wobei der verschiebbare Kolben progressiv unter Eindämmung des eingespritzten Materials zurückgezogen worden ist;
- in Fig. 4 ist das zentrale Einspritzen der, den Kern des fertigen Gegenstandes bildenden, Komponente gezeigt, wobei diese eine Tropfenform innerhalb des umhüllenden Materials einnimmt während der verschiebbare Kolben progressiv zurückgezogen wird indem er aber immer dem Einspritzdruck und der eventuellen Aufschäumung des Materials entgegenwirkt;
- in Fig. 5 ist die Endphase der Einspritzung mit dem verschiebbaren Kolben in der maximalen zurückgezogenen Position gezeigt.
Die Figuren von 6 bis 9 zeigen schematisch vier Arbeitsphasen gemäß dem erfindungsgemäßen Verfahren unter Anwendung des Zweikomponentenverfahrens in Overmoldingtechnik unter Einsatz eines Kolbens welcher aus einem zentralen Bolzen mit zwei koaxialen und voneinander unabhängig beweglichen Hülsen besteht:

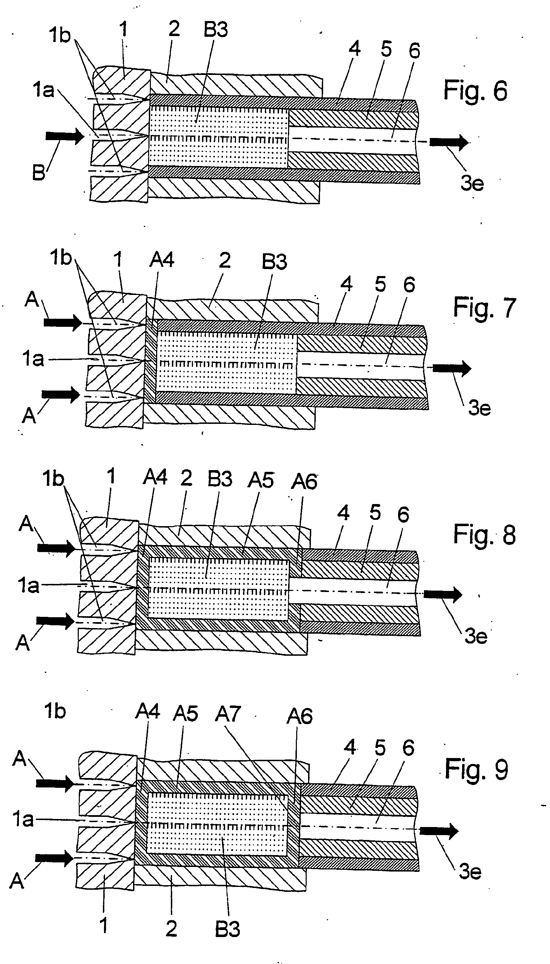

- in Fig. 6 ist die Einspritzphase der, den Kern des fertigen Gegenstandes, bildenden Komponente gezeigt, in dieser Phase nimmt die äußere Hülse die gesamte Länge des Formhohlraumes ein, während der zentrale Bolzen zusammen mit der mittleren Hülse über eine Länge eingeschoben sind welche der doppelten Wandstärke einer Stirnwand des fertigen Gegenstandes entspricht;
- in Fig. 7 ist die erste Einspritzphase des umhüllenden Materials gezeigt, dabei sind die äußere Hülse zusammen mit der mittleren Hülse und mit dem zentralen Bolzen, in Bezug auf die vorhergehende Position, um eine Strecke gleich der Wandstärke der Stirnwand zurückgezogen;
- in Fig. 8 ist die zweite Einspritzphase des umhüllenden Materials gezeigt, dabei sind beide Hülsen so weit zurückgezogen, daß beide Stirnflächen sich in der Position der Stirnfläche des fertigen Gegenstandes befinden, in dieser Phase stützt sich der Bolzen am Kern des herzustellenden Gegenstandes ab;
- in Fig. 9 ist die letzte Einspritzphase des umhüllenden Materials gezeigt welche mit zurückgezogenem zentralen Bolzen erfolgt wobei also dessen Stirnfläche mit jenen der beiden Hülsen fluchtet.

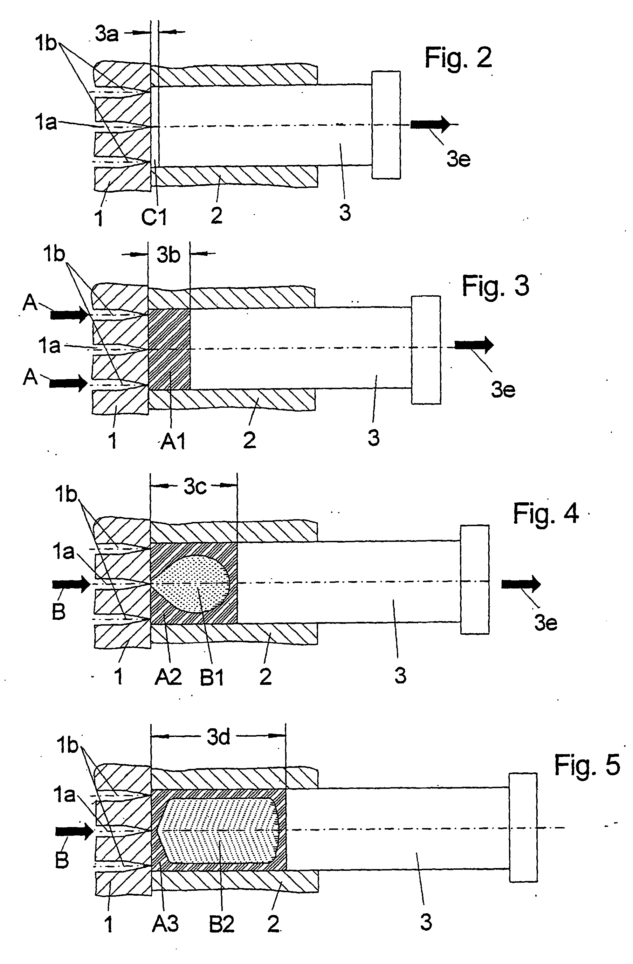

In einer Spritzgußform ist eine Platte 1 mit Einspritzkanälen 1a und 1b für das Einspritzen zwei gleicher oder unterschiedlicher Schmelzwerkstoffe A, B in den Hohlraum C im Innern der Form 2 vorgesehen, dieser Formhohlraum ist einerseits von der Platte 1 verschlossen während er an der gegenüberliegenden Seite durch einen einfachen Kolben 3 oder durch einen zusammengesetzten "Kolben" bestehend z.B. aus einem zentralen Bolzen 6 mit daran aufgeschobenen koaxialen Hülsen 4, 5, verschlossen ist. Der einfache Kolben 3, bzw. der zusammengesetzte Kolben 4, 5, 6 ist axial verschiebbar 3e. Mit der in den Figuren von 1 bis 5 gezeigten Anordnung besteht die Möglichkeit, im Ein oder im Mehrkomponentenverfahren in der Sändwichtechnik, bei Einspritzung des Werkstoffes mit oder ohne Treibmittel, das erfindungsgemäße Verfahren anzuwenden. Im Falle des Einkomponentenverfahrens sind die exzentrischen Einspritzkanäle 1b verschlossen und der Werkstoff kann z.B. zentral über den Kanal 1a eingespritzt werden, dabei ist der einfache Kolben 3 vollständig in den Formhohlraum C eingeschoben oder so weit eingeschoben, daß ein Volumen C 1 frei bleibt welches sich aus dem Abstand 3a zwischen der Stirnfläche des Kolbens 3 und der Platte 1 ergibt.
Auf diese Weise wird eine Einspritzung mit Freistrahl samt dessen nachteiligen Auswirkungen vermieden. Mit der progressiven Einspritzung der Schmelze wird der Kolben 3 progressiv zurückbewegt 3e indem das eingespritzte Material eingedämmt wird und dem Einspritzdruck einstellbar entgegengewikt wird. Die fortschreitende Ausdehnung des eingespritzten Werkstoffes im Innern des Formhohlraumes welcher progressiv und gesteuert vergrößert wird, ermöglicht es ein Werkstück mit sehr homogener Struktur in allen Teilen zu erhalten und im Falle der Anwendung eines Treibmittels ist es möglich die Bildung der äußeren umhüllenden Schicht so zu steuern, daß deren Struktur sich kompakt ausbildet und eine glatte, porenlose und fließmarkierunglose Außenfläche aufweist. Insbesondere im Zusammenhang mit der Einkomponententechnik sieht das erfindungsgemäße Verfahren vor daß, um der Ausdehnung des eingespritzten Werkstoffes entgegenzuwirken, an Stelle des zurückziehbaren Kolbens ein Gas, z.B. Stickstoff eingebracht werden kann, welches progressiv auf kontrollierte Art und regulierbar abgelassen wird. Auf diese Weise können, auch wenn es nicht möglich ist vollständig die Auswirkungen der Einspritzung mit Freistrahl zu verhindern, die anderen negativen Auswirkungen was die Außenoberfläche und die Dichte der äußeren Schicht des Materials betrifft, zum Großteil kontrolliert und vermieden werden sodaß eine glatte, porenlose und genügend dichte Oberfläche erreicht wird.
Im Falle des Zweikomponentenverfahrens in Sandwichtechnik (Fig. 2 - 5) ist am Beginn der Einspritzung des umhüllenden Werkstoffes A, z.B. durch die exzentrischen Einspritzkanäle 1b, der Kolben 3 in den Formhohlraum C soweit eingefahren, daß ein reduziertes Volumen C1 entsteht welches durch Zurückziehen des Kolbens 3 um eine Strecke 3a in Bezug auf die Platte 1 bestimmt wird. Unter diesen Verhältnissen (Fig. 2) wird eine Einspritzung mit Freistrahl samt allen oben erwähnten, nicht erwünschten Auswirkungen vermieden. Während der progressiven Einspritzung des Werkstoffes A wird der Kolben 3 progressiv zurückgefahren um unter Eindämmung des eingespritzten Materials die Position 3b einzunehmen welche vom Volumen A1des eingespritzten Werkstoffes A (Fig. 3) bestimmt wird. Anschließend erfolgt die Einspritzung der Komponente B über den zentralen Kanal 1a; auch während dieser Phase wird der Kolben 3 unter Eindämmung der Ausdehnung der Werkstoffe A, B im Innern des Formhohlraumes zurückgefahren um so die geometrisch regelmäßige und strukturell gleichmäßige Ausdehnung des Werkstoffes B im Innern des umhüllenden Werkstoffes A zu erreichen um so einen Kern B1 (Fig. 4) auszubilden. Nach abgeschlossener Einspritzung der Komponente B erhält man einen geometrisch und strukturell sehr regelmäßigen und homogenen Aufbau sei es des Kerns B2 als auch der Umhüllung A3 welcher durch das progressive Zurückziehen 3e des Kolbens 3 in die extrem von der Platte 1 entfernte Position 3d (Fig. 5) erreicht wird. Insbesondere während dieser letzten Formphase erfolgt eine Streckung der Wände welche die Mantelfläche des Gegenstandes (Korken) bilden wodurch es möglich ist auf wirkungsvolle Weise, sei es die Ausbildung der Wandstärke, als auch deren Dichte zu bestimmen. Die Erfindung schließt eine Einspritzung über einen einzigen Kanal nicht aus.
Im Falle des Zweikomponentenverfahrens in Overmoldingtechnik (Fig. 6 - 9) besteht der "Kolben" aus einem zentralen Bolzen 6 und aus zwei koaxialen Hülsen 4 und 5 welche auf diesen aufgeschoben sind, dabei sind all diese drei Komponenten axial und voneinander unabhängig verschiebbar 3e. In einer ersten Phase (Fig. 6) erfolgt das Einspritzen der ersten Komponente B über den zentralen Einspritzkanal 1a um den Kern B3 des herzustellenden Gegenstandes zu formen. In dieser Phase ist die äußere Hülse 4 über die gesamte axiale Längserstreckung des Formhohlraumes eingeschoben und schlägt mit ihrer Stirnfläche an die Platte 1 an, während der zentrale Bolzen 6 zusammen mit der mittleren Hülse 5 in den Formhohlraum um eine Strecke eingeschoben sind welche der Summe der Wandstärken der beiden Stirnwände des herzustellenden Gegenstandes entspricht. In der zweiten Phase (Fig. 7) sind die Elemente 4, 5, 6 welche den "Kolben" bilden zusammen um eine Strecke zurückgezogen welche der Wandstärke einer Stirnwand des herzustellenden Gegenstandes entspricht um so die erste Einspritzung der zweiten Komponente A durch die beiden exzentrischen Kanäle 1b durchzuführen, wobei ein Bereich ausgegossen wird welcher der Stirnwand des herzustellenden Gegenstandes entspricht. Die dritte Phase beginnt mit dem Zurückziehen der äußeren Hülse 4 und der mittleren Hülse 5 in die Position der maximalen Längserstreckung des herzustellenden Gegenstandes, in dieser Phase verweilt der zentrale Bolzen mit der Stirnfläche anliegend am Kern B3 um zu verhindern daß dieser, unter Einwirkung der folgenden Einspritzung, sich verschiebt. Mit der zweiten Einspritzung der Komponente A erfolgt die Ausbildung der, den Kern B3, umhüllenden Mantelwand A5 und eines Ringbereiches A6 der zweiten Stirnwand. Die vierte Phase umfaßt das Zurückziehen 3e des zentralen Bolzens 6 in die Position in welcher seine Stirnfläche mit jener der beiden Hülsen 4, 5 fluchtet und das anschließende Einspritzen der Komponente A um den Anteil A7 der zweiten Stirnwand des herzustellenden Gegenstandes auszuformen. Auch in diesem Fall schließt die Erfindung nicht aus, daß die Einspritzung über einen einzigen Kanal erfolgt.
Im Falle des Zweikomponentenverfahrens in Overmoldingtechnik mit gesondert, z.B. durch Extrusion, angefertigtem Kern B3 welcher in den Formhohlraum infolge Öffnung der Form innen in die Hülse 4 eingesetzt wird um ihn anschließend mit der Komponente A zu umspritzen, ist die selbe Form mit den identischen in den Figuren von 6 bis 9 gezeigten Merkmalen einsetzbar.
Das erfindungsgemäße Verfahren unter Anwendung des Zweikomponentenverfahrens in Overmoldingtechnik mit in der Form gespritztem oder gesondert geformtem Kern B3, ermöglicht es Wände A4, A5, A6, A7 mit glatten, porenlosen und fließmarkierunglosen Oberflächen zu erzeugen, weiters weisen diese konstante und regelmäßige Wandstärken mit homogener Dichte auf ohne daß Auflagen oder Zentrierungen für den Kern B3 vorgesehen werden.

Der Kolben 3 kann beim Ein- oder beim Zweikomponentenverfahren in Sandwichtechnik z.B. mit Feder-, Luft- oder Gasdruck beaufschlagt sein um auf kontollierte Art und vorzugsweise auf einstellbare Art dem Einspritzdruck der einen oder beider Komponenten A, B innerhalb des Formhohlraumes entgegenwirken zu können.
Gemäß einer Weiterentwicklung des Erfindungsgedankens kann der Kolben 3 z.B. hydraulisch, pneumatisch oder mechanisch betätigt werden und seine Bewegungen 3e können direkt oder indirekt von den Einspritzphasen gesteuert werden.
Der zentrale Bolzen 6 und die zwei koaxialen Hülsen 4, 5 (Fig. 6 - 9) welche den "Kolben" für das erfindungsgemäße Verfahren unter Anwendung des Zweikomponentenverfahrens in Overmoldingtechnik bilden sind einzeln angetrieben und von den einzelnen Einspritzphasen gesteuert und eventuell sind die Elemente 4, 5, 6 auch in Bezug auf den Materialfluß der eingespritzten Komponenten A, B gesteuert.

## Patentansprüche

1. Spritzgussverfahren zur Herstellung von Flaschenkorken oder ähnlicher dickwandiger gegenstände ohne Hohlräume oder Querschnittverzweigungen aus thermoplastischem Kunststoff mit oder ohne Treibmittel, wobei der Formhohlraum der Spritzgussform während der Einspritzphase der Schmelze geometrisch verändert wird indem er vor dem Einspritzen der Schmelze durch Vorfahren eines Kolbens, auf ein Mindestvolumen am Beginn des Einspritzens reduziert wird und während der Dauer des Einspritzens der Schmelze progressiv durch Zurückfahren des Kolbens vergrößert wird, **dadurch gekennzeichnet, dass** das Vergrößern des Formhohlraumes (C) in Abhängigkeit des Einspritzens der Schmelze oder der Schmelzen (A, B) so gesteuert wird, daß bis zum Erreichen des Volumens des Formteils dem Einspritzdruck und dem durch eventuelle Treibmittel in der Schmelze erzeugten Druck sowie dem Materialfluss so entgegengewirkt wird, dass die Auswirkungen eines Freistrahles beim Einspritzen verhindert werden und glatte porenlose und fließmarkierungsfreie Außenflächen erreicht werden.

2. Spritzgussverfahren gemäß Patentanspruch 1, **dadurch gekennzeichnet, dass** dem Einspritzdruck der Schmelze sowie jenem Druck der durch eventuelle Treibmittel in der Schmelze erzeugt wird, durch Einbringen eines Gases im Innern des Formhohlraumes entgegengewirkt wird wobei dieses Gas während der Dauer der Einspritzphase bis zum Erreichen des Volumens des Formteiles in Abhängigkeit des Einspritzens der Schmelze aus dem Formhohlraum abgelassen wird.

3. Spritzgussverfahren gemäß Patentanspruch 1, **dadurch gekennzeichnet, dass** die Elemente (4, 5, 6) welche ein Kolbenorgan bilden und voneinander unabhängig während der Einspritzphasen bewegt (3e) werden können, bei Anwendung des Zweikomponentenverfahrens mit Overmoldingtechnik, in einer Folge bewegt werden welche progressiv, während der Dauer des Einspritzens der Overmoldingkomponente (A) die entsprechenden Volumenteile (A4, A5, A6, A7) des Formteiles freigeben und dass dabei der eingelegte oder vorher gespritzte Kern (B3) des Formteiles während des Spritzens der Ummantelung (A5) progressiv, in Abhängigkeit des Einspritzens der Schmelze, vom entsprechenden Element (4) des Kolbenorgans freigegeben wird wobei die Haltefunktion des Elementes (4) für den Kern (B3) durch die nachströmende Schmelze übernommen wird.

## Claims

1. Injection-moulding process for making bottle corks or similar thick-walled articles without cavities or cross-sectional branches from thermoplastic material with or without blowing agent, the mould cavity of the injection mould being geometrically varied during the injection phase of the melt, in that before the injection of the melt it is reduced to a minimum volume at the beginning of injection by advancing a piston, and is progressively enlarged during the duration of the injection of the melt by retracting the piston, **characterized in that** the enlarging of the mould cavity (C) in dependence on the injection of the melt or the melts (A, B) is controlled in such a way that, until the volume of the moulded part is achieved, the injection pressure and the pressure produced by possible blowing agents in the melt and also the material flow are counteracted in such a way that the effects of a free jet of material during the injection are prevented and smooth outer surfaces that are free from pores and flow markings are achieved.

2. Injection-moulding process according to Patent Claim 1, **characterized in that** the injection pressure of the melt and that pressure which is produced in the melt by possible blowing agents are counteracted by introducing a gas inside the mould cavity, this gas being let out from the mould cavity progressively in dependence on the injection of the melt during the duration of the injection phase up until the volume of the moulded part is achieved.

3. Injection-moulding process according to Patent Claim 1, **characterized in that**, if the two-component process with overmoulding technique is used, the elements (4, 5, 6) which form a piston member and can be moved independently of one another during the injection phases (3e) are moved in a sequence which progressively releases the corresponding volume parts (A4, A5, A6, A7) of the moulded part during the duration of the injection of the overmoulding component (A) and **in that** the inserted or previously injected core (B3) of the moulded part is thereby released progressively, in dependence on the injection of the melt, by the corresponding element (4) of the piston member during the injection of the sheathing (A5), the holding function of the element (4) for the core (B3) being taken over by the after-flowing melt.

## Revendications

1. Procédé de moulage par injection pour la fabrication de bouchons à bouteilles, ou d'objets à parois épaisses analogues, sans espace creux ni ramification de section transversale, à partir d'une matière synthétique thermoplastique avec ou sans agent gonflant, l'espace creux de moulage du moule de moulage par injection, pendant la phase d'injection de la masse fondue, subissant une modification géométrique, en ce que, avant l'injection de la masse fondue, par un avancement d'un piston, il est réduit à un volume minimal au début de l'injection et, pendant la durée de l'injection de la masse fondue, il subit une augmentation progressive par une rétraction du piston, **caractérisé en ce que** le grossissement de l'espace creux de moulage (C) est commandé en fonction de l'injection de la masse fondue ou des masses fondues (A, B), et **en ce que**, jusqu'à l'atteinte du volume de la pièce moulée, on agit à l'encontre de la pression d'injection et de la pression produite par un éventuel agent gonflant dans la masse fondue, ainsi qu'à l'encontre du flux de matériau, **en ce que** les effets d'un jet libre lors de l'injection sont empêchés, et que des faces extérieures lisses, sans porosité et exemptes de marquages d'écoulement, sont obtenues.

2. Procédé de moulage par injection selon la revendication 1, **caractérisé en ce qu'**on s'oppose à la pression d'injection de la masse fondue, ainsi qu'à la pression produite par un éventuel agent gonflant dans la masse fondue, par introduction d'un gaz à l'intérieur de l'espace creux de moulage, et où, pendant la durée de la phase d'injection, ce gaz est déchargé progressivement de l'espace creux de moulage, en fonction de l'injection de la masse fondue, jusqu'à atteinte du volume de la pièce moulée.

3. Procédé de moulage par injection selon la revendication 1, **caractérisé en ce que** les éléments (4, 5, 6), qui forment un organe formant piston, peuvent être déplacés (3e) indépendamment les uns des autres pendant les phases d'injection, en cas d'application du procédé à deux composants avec une technique de surmoulage, ils sont déplacés successivement en libérant progressivement, pendant la durée de l'injection des composants de surmoulage (A), les parties volumiques (A4, A5, A6, A7) correspondantes de la pièce moulée, et **en ce qu'**alors, le noyau (B3), inséré ou injecté préalablement, de la pièce moulée, pendant l'injection de l'enveloppement (A5), est détaché progressivement de l'élément (4) correspondant de l'organe formant piston, en fonction de l'injection de la masse fondue, et où la fonction de maintien de l'élément (4), pour le noyau (B3), est assumée par l'écoulement de la masse fondue continuant à se faire.
